# EUROPÄISCHE PATENTSCHRIFT

(11) **EP 0 451 721 B1**
(45) Veröffentlichungstag und Bekanntmachung des Hinweises auf die Patenterteilung: **03.08.1994**
(21) Anmeldenummer: 91105403.9
(22) Anmeldetag: 05.04.1991
(51) Int. Cl.: C23G 1/36, B01D 17/02

(54) **Verfahren zum Reinigen von Gegenständen sowie Anlage zur Durchführung eines solchen Verfahrens**
Process for cleaning objects and apparatus therefor
Procédé de nettoyage d'objets et appareil pour l'exécuter

(30) Priorität: 13.04.1990 DE 4012022
(43) Veröffentlichungstag der Anmeldung: 16.10.1991
(73) Patentinhaber: Dürr GmbH, D-70435 Stuttgart (DE); MERCEDES-BENZ AG, 70327 Stuttgart (DE)
(72) Erfinder: Hellstern, Rüdiger, W-7000 Stuttgart 70 (DE); Hösel, Peter, W-7530 Pforzheim (DE); Eberle, Arwed, W-7410 Reutlingen 11 (DE); Lachenmayer, Ulrich, Dr., W-7336 Uhingen (DE); Kohler, Herbert, Dr., W-7014 Kornwestheim (DE)
(74) Vertreter: Hoeger, Stellrecht & Partner

(56) Entgegenhaltungen:
- EP-A- 0 196 644
- DE-A- 2 330 200
- GB-A- 2 053 978
- GB-A- 2 159 142

## Beschreibung

Die Erfindung betrifft ein Verfahren zum Reinigen von mit öl- oder fetthaltigem Schmutz verunreinigten Gegenständen, wie von der Bearbeitung kommenden Werkstücken, mit Hilfe einer wässrigen, mindestens eine waschaktive Stubstanz enthaltenden Reinigungsflüssigkeit, bei dem die Gegenstände nach der Behandlung mit der Reinigungsflüssigkeit mit einer wässrigen Spülflüssigkeit, insbesondere mit möglichst reinem Wasser, gespült werden und bei dem gebrauchte Reinigungs- und/oder Spülflüssigkeit einem Verdampfer zugeführt und ein in letzterem durch Destillieren gewonnenes Destillat zurückgeführt wird. Des weiteren betrifft die Erfindung eine Anlage zur Durchführung eines solchen Verfahrens, mit mindestens einem Reinigungsgerät, einem Spülgerät und einem Verdampfer, bei der das Reinigungsgerät zur Überleitung von Reinigungsflüssigkeit in den Verdampfer über eine Reinigungsflüssigkeitsleitung mit dem Verdampfer verbunden ist und der Verdampfer über eine der Rückführung des Destillats dienende Destillatleitung verfügt.

Unter waschaktiven Substanzen sollen im folgenden Substanzen wie Detergenzien und andere waschaktive Substanzen im engeren Sinn, aber auch organische Lösungsmittel verstanden werden.

Aus der EP-A-0 196 644 ist bereits eine Anlage der vorgenannten Art bekanntgeworden, in der die zu reinigenden Gegenstände nacheinander ein Reinigungsbad und ein Spülbad durchlaufen. Ein Überlauf des Spülbads ist mit dem Reinigungsbad verbunden, und eine Reinigungsflüssigkeitsleitung führt von einem Überlauf des Reinigungsbads zu einem Ölabscheider, der mit einem Verdampfer kombiniert ist. Außerdem führt eine mit einem Ventil versehene Ablaßleitung des Spülbads zu diesem Ölabscheider, in dem eine Ölphase, d. h. mit Öl angereicherte Reinigungs- und/oder Spülflüssigkeit erzeugt und dem Verdampfer zugeführt wird. Eine von letzterem wegführende Destillatleitung führt zum Spülbad zurück, während der im Ölabscheider zumindest von einem Teil der in der gebrauchten Reinigungs- und/oder Spülflüssigkeit enthaltenen Öle und Fette befreite Flüssigkeitsteil in das Reinigungsbad zurückgeführt wird. Da in dieser bekannten Anlage dem Verdampfer ölhaltige Verschmutzungen, aber auch in der Reinigungsflüssigkeit enthaltene waschaktive Substanzen zugeführt werden, hat diese bekannte Anlage zwei Nachteile: Da Detergenzien und dergleichen im Verdampfer nicht in die Dampfphase übergehen, wohl aber niedersiedende Komponenten von Bearbeitungsölen und andere Substanzen, die mit dem Wasserdampf in die Dampfphase übergehen, gehen die in den Verdampfer gelangten waschaktiven Substanzen verloren, und die im Destillat enthaltenen Verunreinigungen werden dem Reinigungsbad mit dem Destillat wieder zugeführt.

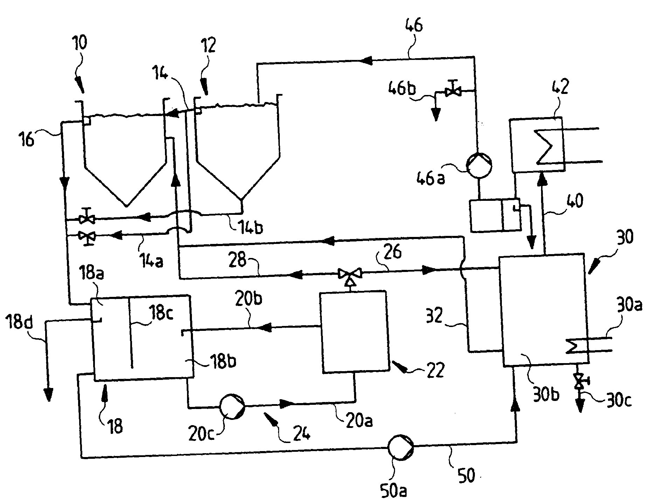

Den Nachteil, daß niedersiedende Bestandteile in die Spülbäder geschleppt werden, hätte auch die Anlage nach den Fig. 1 und 2 der älteren DE-PS 39 39 222 bei einer Verwendung als Reinigungsanlage. Diese Anlage besitzt ein Aktivbad zur chemischen Behandlung von Gegenständen, aus dem die Behandlungsflüssigkeit einem Verdampfer zugeführt wird. Das von letzterem abgezogene Destillat wird dem letzten von mehreren in Kaskade geschalteten Spülbädern zugeführt, während das beim Destillieren anfallende Konzentrat in das Aktivbad zurückgeleitet wird. Ebenso gelangt der Überlauf des ersten Spülbads in das Aktivbad. Nach dem Durchlaufen der in Kaskade geschalteten Spülbäder gelangen die Gegenstände in ein weiteres Spülbad, dessen Spülflüssigkeit im Kreislauf mittels eines Ionentauschers regeneriert wird.

Der Erfindung lag die Aufgabe zugrunde, das als erstes beschriebene bekannte Verfahren und die bekannte Anlage zur Durchführung dieses Verfahrens so zu verbessern, daß die genannten Nachteile zumindest deutlich vermindert werden.

Ausgehend von einem Verfahren der eingangs erwähnten Art läßt sich diese Aufgabe erfindungsgemäß dadurch lösen, daß die dem Verdampfer zuzuführende Flüssigkeit zuvor einer Membranfiltration unterworfen, das dabei gewonnene Permeat mindestens teilweise destilliert, das Destillat mindestens teilweise der im Spülprozess verwendeten Spülflüssigkeit und das bei der Destillation anfallende Konzentrat mindestens teilweise der im Reinigungsprozess verwendeten Reinigungsflüssigkeit zugesetzt wird. Da höhermolekulare Bestandteile und damit auch niedersiedende Öle eine Filtermembran, wie sie für die sogenannte Mikro- oder Ultrafiltration bekannt ist, nicht passieren können, wird auf diese Weise verhindert, daß in der Spül- und/oder Reinigungsflüssigkeit enthaltene Verunreinigungen, welche in die Dampfphase übergehen würden, in den Verdampfer gelangen, so daß der im Verdampfer erzeugte Dampf und damit das der Spülflüssigkeit zuzusetzende Kondensat derartige Verunreinigungen nicht enthält. Dadurch, daß das Konzentrat, welches bei der Destillation des durch die Membranfiltration gewonnenen Permeats anfällt, mindestens teilweise der im Reinigungsprozeß verwendeten Reinigungsflüssigkeit zugesetzt wird, gehen die in den Verdampfer gelangenden waschaktiven Substanzen für den Reinigungsprozeß nicht verloren.

Aus der DE-AS 23 30 200 ist es an sich bekannt, die in einem Reinigungsgerät genutzte wässrige, waschaktive Substanzen enthaltende Reinigungsflüssigkeit einer Ultrafiltration mit Hilfe eines Membranfiltergeräts zu unterziehen und das die waschaktiven Substanzen enthaltende Permeat der Reinigungsflüssigkeit wieder zuzusetzen. Bei der Anlage gemäß diesem Stand der Technik wird Reinigungsflüssigkeit aus einem Reinigungsgerät abgezogen und in einen Reinigungsflüssigkeitssammelbehälter geleitet, der mit dem Membranfiltergerät über eine Zulauf- und eine Rückführleitung zu einem eine Pumpe aufweisenden Kreislauf zusammengeschlossen ist. Eine Permeatleitung führt dann vom Membranfiltergerät direkt zum Reinigungsgerät. Dieser Stand der Technik konnte das erfindungsgemäße Verfahren jedoch nicht nahelegen, da zum einen bei diesem bekannten Verfahren das bei der Membranfiltration anfallende Permeat unmittelbar wieder dem Reinigungsgerät zugeführt wird und weil zum anderen eine Membranfiltration zum Aufbereiten von Spülflüssigkeiten insofern ungeeignet ist, weil sich mit der Membranfiltration waschaktive Substanzen nicht zurückhalten lassen - bei dem erfindungsgemäßen Verfahren sollen ja Reinigungs- und Spülflüssigkeit insbesondere gemeinsam aufbereitet werden.

Um zunächst die Hauptmenge des von den gereinigten Gegenständen abgewaschenen Öls von der aufzubereitenden Flüssigkeit abzutrennen, empfiehlt es sich, die dem Verdampfer zuzuführende Reinigungsflüssigkeit vor der Membranfiltration in einem Ölabscheider zu sammeln und die so vorgereinigte Flüssigkeit im Kreislauf der Membranfiltration zu unterwerfen, so daß der Ölabscheider nicht nur die Funktion einer Vorreinigung übernimmt, sondern auch als Sammelbehälter für die im Kreislauf einer Membranfiltration zu unterwerfende Flüssigkeit dient.

Will man eine hohe Erneuerungsrate bei der im Reinigungsprozeß verwendeten Reinigungsflüssigkeit erreichen, so empfiehlt es sich, einen Teil des bei der Membranfiltration anfallenden Permeats einschließlich der in ihm enthaltenen waschaktiven Substanzen unmittelbar der im Reinigungsprozeß verwendeten Reinigungsflüssigkeit zuzusetzen und diesen Teil des Permeats nicht zu destillieren. Auf diese Weise werden auch die Energiekosten des erfindungsgemäßen Verfahrens vermindert, da nicht das gesamte Permeat verdampft zu werden braucht.

Wie bei dem an erster Stelle beschriebenen bekannten Verfahren ist es auch bei dem erfindungsgemäßen Verfahren vorteilhaft, wenn mit der beim Kondensieren des Destillats gewonnenen Wärme die im Reinigungsprozeß verwendete Reinigungsflüssigkeit und/oder die im Spülprozeß verwendete Spülflüssigkeit aufgeheizt wird - die Reinigungs- und die Spülflüssigkeit sind weit wirksamer, wenn sie im erwärmten Zustand auf die zu reinigenden bzw. zu spülenden Gegenstände einwirken.

Die aufzubereitende Reinigungsflüssigkeit und/oder die aufzubereitende Spülflüssigkeit könnten gesondert aus dem Reinigungs- bzw. dem Spülgerät abgezogen und der Membranfiltration unterworfen werden. Damit jedoch immer mit möglichst sauberen Spül- und Reinigungsflüssigkeiten gearbeitet wird, ist es von Vorteil, wenn - wie bei dem eingangs an erster Stelle beschriebenen bekannten Verfahren - entsprechend der Menge des der Spülflüssigkeit zugesetzten Destillats Spülflüssigkeit aus dem Spülprozeß abgezogen und der Reinigungsflüssigkeit zugesetzt wird. Da dadurch die Konzentration der waschaktiven Substanzen in der im Reinigungsprozeß verwendeten Reinigungsflüssigkeit herabgesetzt wird, ist es von besonderem Vorteil, wenn diese Verfahrensvariante in Kombination mit der Maßnahme verwendet wird, einen Teil des bei der Membranfiltration anfallenden Permeats, welches ja die waschaktiven Substanzen enthält, der im Reinigungsprozeß verwendeten Reinigungsflüssigkeit zuzusetzen.

Nach einem weiteren Erfindungsgedanken wird eine Anlage der eingangs erwähnten Art zur Lösung der oben aufgeführten Aufgabe so ausgebildet, daß die Reinigungsflüssigkeitsleitung zu einem Membranfiltergerät führt, welches zur Überleitung des vom Membranfiltergerät erzeugten Permeats in den Verdampfer über eine Permeatleitung mit dem Verdampfer verbunden ist, daß die Destillatleitung mit dem Spülgerät verbunden ist und daß ein Konzentratbereich des Verdampfers über eine Konzentratleitung mit dem Reinigungsgerät verbunden ist. Bei dem Konzentratbereich des Verdampfers wird es sich überlicherweise um einen unteren Bereich des Verdampfers handeln, in dem sich die beim Destillieren zurückbleibenden Rückstände ansammeln.

Da ein Membranfiltergerät eine höhere Effizienz aufweist, wenn die zu reinigende Flüssigkeit im Kreislauf an der Membran vorbeigeführt wird, empfiehlt sich eine Ausführungsform der erfindungsgemäßen Anlage, bei der die Reinigungsflüssigkeitsleitung das Reinigungsgerät mit einem Reinigungsflüssigkeitssammelbehälter verbindet und letzterer sowie das Membranfiltergerät über eine Zulauf- und eine Rückführleitung zu einem eine Pumpe aufweisenden Kreislauf zusammengeschlossen sind. Zweckmäßigerweise bildet man dann den Reinigungsflüssigkeitssammelbehälter als Ölabscheider aus, welcher einen Ölbereich und einen Reinflüssigkeitsbereich aufweist, wobei die Zulaufleitung an den letzteren angeschlossen ist. Wie bereits erwähnt, erfüllt der Sammelbehälter dann einen doppelten Zweck, da er zum einen den erwähnten Kreislauf speist und zum anderen eine Vorreinigung der aufzubereitenden Flüssigkeit bewirkt.

Es ist ferner empfehlenswert, die Anlage so auszubilden, daß die Destillatleitung mindestens einen Wärmetauscher enthält, der die Spül- und/oder Reinigungsflüssigkeit direkt oder über eine Wärmeträgerflüssigkeit und mindestens einen weiteren Wärmetauscher aufheizt, um so die für den Verdampfer aufgewendete Energie besser zu nutzen.

Im Ölabscheider setzt sich ein Schlamm ab, der vor der Entsorgung noch konzentriert werden sollte. Deshalb ist bei einer bevorzugten Ausführungsform der erfindungsgemäßen Anlage eine untere Zone des Reinflüssigkeitsbereichs des Ölabscheiders über eine Entsorgungsleitung mit dem Verdampfer verbunden. Enhält diese Entsorgungsleitung ein Ventil, gegebenenfalls auch eine Pumpe, so kann der Schlamm chargenweise dem Verdampfer zugeführt werden.

Des weiteren ist es vorteilhaft, wenn das Membranfiltergerät über eine mit einem Ventil versehene Permeatleitung mit dem Reinigungsgerät verbunden ist, um so einen Teil des Permeats mit den darin enthaltenen waschaktiven Substanzen unmittelbar wieder dem Reinigungsgerät zuzuführen und in diesem den Verschmutzungsgrad der Reinigungsflüssigkeit zu vermindern, ohne daß das gesamte Permeat destilliert und die dafür erforderliche Energie aufgewandt werden muß.

Weitere Merkmale, Vorteile und Einzelheiten der Erfindung ergeben sich aus der nachfolgenden Beschreibung sowie der beigefügten schematischen Darstellung einer bevorzugten Ausführungsform der erfindungsgemäßen Anlage.

Die in der beigefügten Zeichnung schematisch dargestellte Anlage besitzt ein Reinigungsgerät 10 und ein Spülgerät 12, die beide als Bäder dargestellt wurden, jedoch auch jede andere, aus dem Stand der Technik bekannte Form haben können. Der Einfachheit halber wurden auch Spritz- und Sprühdüsen weggelassen, wie sie derartige Reinigungs- und Spülgeräte aufweisen. Die zu reinigenden Gegenstände, z.B. bearbeitete metallische Werkstücke, die von der Bearbeitung her mit ölhaltigen Substanzen und Schmutz verunreinigt sind, werden zunächst im Reinigungsgerät 10 gereinigt und dann im Spülgerät 12 gespült. Wie sich aus der vorstehenden Beschreibung ergibt, kann eine solche Anlage aber natürlich auch mehrere Reinigungsgeräte und mehrere Spülgeräte umfassen, die ebenso wie bei der eingangs geschilderten bekannten Anlage in Reihe hintereinander geschaltet sind und von den zu behandelnden Gegenständen durchlaufen werden. Im Reinigungsgerät 10 werden die Gegenstände mit einer wässrigen Reinigungsflüssigkeit behandelt, welche waschaktive Substanzen enthält, um die Verschmutzungen inklusive Ölen und Fetten von diesen Gegenständen abzuwaschen, worauf die gereinigten Gegenstände in das Spülgerät 12 kommen, um dort vor allem die waschaktiven Substanzen abzuspülen, aber auch noch an den Gegenständen verbliebene Schmutzreste. Die in der Zeichnung dargestellten Badbehälter werden in der Praxis am Boden mit Ableitungen versehen sein, um Schlämme oder andere Sedimente vom Boden der Badbehälter abziehen und gegebenenfalls aufbereiten zu können.

Das Spülgerät 12 ist über eine Spülflüssigkeitsleitung 14 mit dem Reinigungsgerät 10 verbunden, und bei dieser Spülflüssigkeitsleitung soll es sich um eine Überlaufleitung des Spülgeräts handeln, wie dies in der Zeichnung schematisch dargestellt wurde. Hierdurch wird unabhängig von dem Spülbad zugeführter Flüssigkeit im Spülgerät 12 ein vorgegebener Spülflüssigkeitsstand aufrechterhalten.

In gleicher Weise ist das Reinigungsgerät 10 mit einem Überlauf versehen, an den eine Reinigungsflüssigkeitsabflußleitung 16 angeschlossen ist; über diese fließt die bei der Reinigung der behandelten Gegenstände entstehende Emulsion aus Reinigungsflüssigkeit und abgewaschenen öl- und fetthaltigen Verunreinigungen aus dem Badbehälter des Reinigungsgeräts 10 ab. Um ggf. Spülflüssigkeit direkt aufbereiten zu können, ohne daß sie zuvor im Reinigungsprozess mitverwendet wird, sind der Überlauf des Spülgeräts 12 und dessen Boden mit in die Abflußleitung mündenden Spülflüssigkeitsleitungen 14a bzw. 14b versehen, welche einstellbare Ventile enthalten. Die Abflußleitung 16 mündet in den oberen Bereich eines Ölabscheiders 18, welcher einen Ölbereich 18a und einen Reinigungsflüssigkeitsbereich 18b aufweist, die durch eine unten einen Durchgang freilassende Trennwand 18c voneinander getrennt sein können. Auf diese Weise lassen sich im Ölabscheider 18 die auf der Reinigungsflüssigkeit aufschwimmenden ölhaltigen Verunreinigungen oben im Ölbereich 18a sammeln, von wo sie über einen Überlauf und eine Ölleitung 18d aus dem Ölabscheider 18 abgezogen werden können. An den Boden des Reinflüssigkeitsbereichs 18b ist erfindungsgemäß eine Zulaufleitung 20a angeschlossen, die zu einem Membranfiltergerät 22 führt, das eine nicht dargestellte Mikro- oder Ultrafiltrationsmembran enthält; von diesem Filtergerät 22 führt eine Rückführleitung 20b in einen oberen Teil des Reinflüssigkeitsbereichs 18b des Ölabscheiders 18, so daß der letztere zusammen mit der Zulaufleitung 20a, dem Filtergerät 22 und der Rückführleitung 20b einen Filtrationskreislauf 24 bildet. Um die im Ölabscheider 18 von ölhaltigen Verunreinigungen weitgehend gereinigte Reinigungsflüssigkeit im Filtrationskreislauf 24 umlaufen zu lassen, enthält die Zulaufleitung 20a eine Pumpe 20c. Die noch Restöl sowie waschaktive Substanzen enthaltende Reinigungsflüssigkeit wird durch den Filtrationskreislauf 24 im Filtergerät 22 an der Anströmseite der nicht dargestellten Filtrationsmembran vorbeigeführt, wobei Wasser und die niedermolekularen waschaktiven Substanzen durch die Membran hindurchtreten können, so daß im Filtergerät 22 ein Permeat gebildet wird. Um dieses aus dem Filtergerät 22 abziehen zu können, führen von diesem eine erste und eine zweite Permeatleitung 26 bzw. 28 weg, deren Durchsatz sich mit Ventilen steuern läßt. Die Permeatleitung 26 mündet in einen Verdampfer 30, in dem das dank der Filtration ölfreie Permeat durch eine Heizung 30a erhitzt und teilweise verdampft wird. Das Permeat enthält zwar waschaktive Substanzen, diese gehen jedoch im Verdampfer 30 nicht in die Dampfphase über und reichern sich so in dem im Verdampfer 30 verbleibenden Konzentrat an, das aus einem unteren Bereich des Verdampfers 30, nämlich einem Konzentratbereich 30b, über eine Konzentratleitung 32 abgezogen wird. Das die waschaktiven Substanzen enthaltende Konzentrat und das über die Leitung 28 abgezogene Permeat werden über die Leitungen 32 und 28 in das Reinigungsgerät 10 eingespeist (eine hierfür gegebenenfalls erforderliche Pumpe wurde der Einfachheit halber nicht dargestellt). Permeat wird über die Permeatleitung 28 allerdings nur dann in das Reinigungsgerät 10 eingespeist, wenn eine relativ hohe Reinheit der Reinigungsflüssigkeit im Reinigungsgerät 10 gewünscht wird; aus diesem Grund sind die Permeatleitungen 26 und 28 mit den vorstehend erwähnten Ventilen versehen.

Vom oberen Bereich des Verdampfers 30 führt eine Dampfleitung 40 weg, in die der Verdampfer zumindest nahezu reinen Wasserdampf speist. Die Dampfleitung 40 führt zu einem Wärmetauscher 42, in dem der Wasserdampf kondensiert; die dabei entstehende Wärme wird in nicht näher dargestellter Weise zum Beheizen der Spülflüssigkeit im Spülgerät 12 und zum Beheizen der Reinigungsflüssigkeit im Reinigungsgerät 10 verwendet; zu diesem Zweck können auch die Badbehälter dieser beiden Geräte mit Wärmetauschern versehen sein, die über Wärmeträgerflüssigkeitsleitungen mit dem Wärmetauscher 42 verbunden sind.

Vom Wärmetauscher 42 führt eine Destillatleitung 46 zum Spülgerät 12; durch diese Leitung wird das im Wärmetauscher 42 kondensierte Destillat, nämlich zumindest nahezu reines Wasser, dem Spülgerät 12 zugeführt. Eine in der Destillatleitung 46 enthaltene Pumpe wurde mit 46a bezeichnet. Bei einer abgewandelten Ausführungsform könnte die Destillatleitung 46 über mit Ventilen versehene Zweigleitungen auch mit beiden Geräten 10 und 12 verbunden sein.

Im Ölabscheider 18 fällt ein schlammartiges Sediment an, welches über eine Entsorgungsleitung 50 chargenweise dem Verdampfer 30 zugeführt werden kann, um es einzudicken und hierin enthaltene waschaktive Substanzen über die Konzentratleitung 32 dem Kreislauf wieder zuzuführen. Eine in der Entsorgungsleitung 50 enthaltene Pumpe wurde mit 50a bezeichnet. Zum Abführen des eingedickten Schlamms besitzt der Verdampfer am Boden eine Entsorgungsleitung 30c.

Grundsätzlich wäre es natürlich auch möglich, zum Regenerieren der im Spülgerät 12 verwendeten Spülflüssigkeit diese nicht über das Reinigungsgerät 10, sondern unmittelbar einer Aufbereitung zuzuführen, wobei die Aufbereitung im Abscheiden von Öl und/oder im Reinigen durch Destillieren bestehen könnte. Für eine solche Verfahrensführung können die Leitungen 14a und/oder 14b verwendet werden; die Leitung 14 kann in diesem Fall weggelassen werden.

Des weiteren könnte es sich bei dem Wärmetauscher 42 auch direkt um einen oder mehrere Wärmetauscher handeln, die in das Reinigungsgerät 10 und/oder das Spülgerät 12 eingebaut sind.

Schließlich zweigt von der Destillatleitung 46 noch eine Abführleitung 46b ab, die zum Ableiten des Destillats in eine Abwasserleitung verwendet wird, wenn im Verdampfer aus dem Ölabscheider 18 stammender Schlamm eingedickt wird.

## Patentansprüche

1. Verfahren zum Reinigen von mit öl- oder fetthaltigem Schmutz verunreinigten Gegenständen mit Hilfe einer wässrigen, eine waschaktive Substanz enthaltenden Reinigungsflüssigkeit, bei dem die Gegenstände nach der Behandlung mit der Reinigungsflüssigkeit mit einer wässrigen Spülflüssigkeit gespült werden, gebrauchte Reinigungs- und/oder Spülflüssigkeit einem Verdampfer (30) zugeführt und ein in letzterem durch Destillieren gewonnenes Destillat zurückgeführt wird, **dadurch gekenn-** **zeichnet,** daß die dem Verdampfer (30) zuzuführende Flüssigkeit zuvor einer Membranfiltration unterworfen, das dabei gewonnene Permeat mindestens teilweise destilliert, das Destillat mindestens teilweise der im Spülprozeß verwendeten Spülflüssigkeit und das bei der Destillation entstehende Konzentrat mindestens teilweise der im Reinigungsprozeß verwendeten Reinigungsflüssigkeit zugesetzt wird.

2. Verfahren nach Anspruch 1, dadurch gekennzeichnet, daß entsprechend der Menge des der Spülflüssigkeit zugesetzten Destillats Spülflüssigkeit aus dem Spülprozeß abgezogen und der im Reinigungsprozeß verwendeten Reinigungsflüssigkeit zugesetzt wird und daß die der Membranfiltration zugeführte Flüssigkeit aus dem Reinigungsprozeß abgezogen wird.

3. Verfahren nach Anspruch 1 oder 2, dadurch gekennzeichnet, daß die dem Verdampfer (30) zuzuführende Reinigungs- und/oder Spülflüssigkeit vor der Membranfiltration in einem Ölabscheider (18) gesammelt und die so vorgereinigte Flüssigkeit im Kreislauf der Membranfiltration unterworfen wird.

4. Verfahren nach einem oder mehreren der vorstehenden Ansprüche, dadurch gekennzeichnet, daß ein Teil des Permeats einschließlich der in ihm enthaltenen waschaktiven Substanz der im Reinigungsprozeß verwendeten Reinigungsflüssigkeit zugesetzt wird.

5. Verfahren nach einem oder mehreren der vorstehenden Ansprüche, dadurch gekennzeichnet, daß mit der beim Kondensieren des Destillats gewonnenen Wärme die im Reinigungsprozeß verwendete Reinigungsflüssigkeit und/oder die im Spülprozeß verwendete Spülflüssigkeit aufgeheizt wird.

6. Anlage zur Durchführung des Verfahrens nach einem oder mehreren der vorstehenden Ansprüche, mit mindestens einem Reinigungsgerät (10), einem Spülgerät (12) und einem Verdampfer (30), bei der das Reinigungsgerät zur Überleitung von Reinigungsflüssigkeit in den Verdampfer über eine Reinigungsflüssigkeitsleitung (16) mit dem Verdampfer (30) verbunden ist und der Verdampfer über eine der Rückführung des Destillats dienende Destillatleitung (40, 46) verfügt, **dadurch gekennzeichnet,** daß die Reinigungsflüssigkeitsleitung (16, 20a) zu einem Membranfiltergerät (22) führt, welches zur Überleitung von durch das Membranfiltergerät erzeugtem Permeat über eine Permeatleitung (26) mit dem Verdampfer (30) verbunden ist, daß die Destillatleitung (40, 46) mit dem Spülgerät (12) verbunden ist, und daß ein Konzentratbereich (30b) des Verdampfers (30) über eine Konzentratleitung (32) mit dem Reinigungsgerät (10) verbunden ist.

7. Anlage nach Anspruch 6, dadurch gekennzeichnet, daß das Spülgerät (12) zur Überleitung von Spülflüssigkeit in das Reinigungsgerät (10) mit letzterem über eine Spülflüssigkeitsleitung (14) verbunden ist.

8. Anlage nach Anspruch 6 oder 7, dadurch gekennzeichnet, daß die Reinigungsflüssigkeitsleitung (16) das Reinigungsgerät (10) mit einem Reinigungsflüssigkeitssammelbehälter (18) verbindet und daß letzterer sowie das Membranfiltergerät (22) über eine Zulauf- und eine Rückführleitung (20a bzw. 20b) zu einem eine Pumpe (20c) aufweisenden Kreislauf (24) zusammengeschlossen sind.

9. Anlage nach einem oder mehreren der Ansprüche 6 bis 8, dadurch gekennzeichnet, daß die Destillatleitung (40, 46) mindestens einen Wärmetauscher (42) zur Aufheizung der Spül- und/oder Reinigungsflüssigkeit enthält.

10. Anlage nach Anspruch 8, dadurch gekennzeichnet, daß der Reinigungsflüssigkeitssammelbehälter als Ölabscheider (18) ausgebildet ist, welcher einen Ölbereich (18a) und einen Reinflüssigkeitsbereich (18b) aufweist, und daß die Zulaufleitung (20a) an den letzteren angeschlossen ist.

11. Anlage nach Anspruch 10, dadurch gekennzeichnet, daß eine untere Zone des Ölabscheiders (18) über eine Entsorgungsleitung (50) mit dem Verdampfer (30) verbunden und eine untere Zone des Verdampfers mit einer Ableitung (30c) für aus dem Verdampfer abzuführenden Abfall versehen ist.

12. Anlage nach einem oder mehreren der Ansprüche 6 bis 11, dadurch gekennzeichnet, daß das Membranfiltergerät (22) über eine mit Ventil versehene Permeatleitung (28) mit dem Reinigungsgerät (10) verbunden ist.

## Claims

1. Process for cleaning objects soiled by impurities containing oil or grease with the aid of an aqueous cleaning fluid containing a washing agent, the objects being rinsed with an aqueous rinsing fluid after the treatment with the cleaning fluid, used cleaning and/or rinsing fluid being fed to a vaporizer (30) and a distillate recovered in said vaporizer by distillation being fed back, characterized in that the fluid to be fed to the vaporizer (30) is subjected beforehand to a membrane filtration, the permeate thereby recovered is at least partially distilled, the distillate is at least partially added to the rinsing fluid used in the rinsing process and the concentrate resulting during the distillation is at least partially added to the cleaning fluid used in the cleaning process.

2. Process as defined in claim 1, characterized in that rinsing fluid is drawn off from the rinsing process, according to the amount of the distillate added to the rinsing fluid, and added to the cleaning fluid used in the cleaning process and that the fluid supplied for the membrane filtration is drawn off from the cleaning process.

3. Process as defined in claim 1 or 2, characterized in that the cleaning and/or rinsing fluid to be fed to the vaporizer (30) is collected prior to the membrane filtration in an oil separator (18) and the fluid precleaned in this manner is subjected to the membrane filtration in the circuit.

4. Process as defined in any or several of the preceding claims, characterized in that part of the permeate, including the washing agent contained therein, is added to the cleaning fluid used in the cleaning process.

5. Process as defined in any or several of the preceding claims, characterized in that the cleaning fluid used in the cleaning process and/or the rinsing fluid used in the rinsing process is heated with the heat recovered during the condensing of the distillate.

6. Apparatus for performing the process as defined in any or several of the preceding claims, comprising at least one cleaning device (10), one rinsing device (12) and one vaporizer (30), the cleaning device being connected to the vaporizer (30) via a cleaning fluid line (16) for transferring cleaning fluid to the vaporizer and the vaporizer having a distillate line (40, 46) serving to feed back the distillate, characterized in that the cleaning fluid line (16, 20a) leads to a membrane filter device (22) connected to the vaporizer (30) via a permeate line (26) for transferring permeate generated by the membrane filter device, that the distillate line (40, 46) is connected to the rinsing device (12), and that a region (30b) of concentrate in the vaporizer (30) is connected to the cleaning device (10) via a concentrate line (32).

7. Apparatus as defined in claim 6, characterized in that the rinsing device (12) is connected via a rinsing fluid line (14) to the cleaning device (10) for transferring rinsing fluid thereto.

8. Apparatus as defined in claim 6 or 7, characterized in that the cleaning fluid line (16) connects the cleaning device (10) with a cleaning fluid collecting tank (18) and that the latter and the membrane filter device (22) are joined to one another via a supply and a return line (20a and 20b, respectively) to form a circuit (24) including a pump (20c).

9. Apparatus as defined in any or several of claims 6 to 8, characterized in that the distillate line (40, 46) includes at least one heat exchanger (42) for heating up the rinsing and/or cleaning fluid.

10. Apparatus as defined in claim 8, characterized in that the cleaning fluid collecting tank is designed as an oil separator (18) comprising an oil region (18a) and a clean fluid region (18b), and that the supply line (20a) is connected to the latter.

11. Apparatus as defined in claim 10, characterized in that a lower zone of the oil separator (18) is connected via a discharge line (50) to the vaporizer (30) and a lower zone of the vaporizer is provided with an outlet line (30c) for waste to be removed from the vaporizer.

12. Apparatus as defined in any or several of claims 6 to 11, characterized in that the membrane filter device (22) is connected to the cleaning device (10) via a permeate line (28) provided with a valve.

## Revendications

1. Procédé pour le nettoyage d'objets souillés avec des saletés huileuses ou graisseuses à l'aide d'un liquide de nettoyage aqueux contenant une substance détergente, dans lequel après le traitement avec le liquide de nettoyage les objets sont rincés avec un liquide de rinçage aqueux, du liquide de nettoyage et/ou de rinçage est amené à un vaporisateur (30) et un distillat obtenu par distillation dans ce dernier est retourné, caractérisé en ce que le liquide à amener au vaporisateur (30) est soumis auparavant à une filtration à membrane, le perméat alors obtenu est au moins partiellement distillé, le distillat est ajouté au moins partiellement au liquide de rinçage utilisé dans le processus de rinçage et le produit concentré formé lors de la distillation est ajouté au moins partiellement au liquide de nettoyage utilisé dans le processus de nettoyage.

2. Procédé selon la revendication 1, caractérisé en ce qu'on extrait hors du processus de rinçage du liquide de rinçage en correspondance de la quantité de distillat ajoutée au liquide de rinçage et on l'ajoute au liquide de nettoyage utilisé dans le processus de nettoyage, et en ce que le liquide amené à la filtration à membrane est extrait hors du processus de nettoyage.

3. Procédé selon l'une ou l'autre des revendications 1 et 2, caractérisé en ce que le liquide de nettoyage et/ou de rinçage à amener dans le vaporisateur (30) est collecté avant la filtration à membrane dans un séparateur d'huile (18) et le liquide ainsi prénettoyé est soumis au circuit de filtration à membrane.

4. Procédé selon l'une ou plusieurs des revendications précédentes, caractérisé en ce qu'une partie du perméat, y compris les substances détergentes qu'elle contient, est ajoutée au liquide de nettoyage utilisé dans le processus de nettoyage.

5. Procédé selon l'une ou plusieurs des revendications précédentes, caractérisé en ce qu'on chauffe le liquide de nettoyage utilisé dans le processus de nettoyage et/ou le liquide de rinçage utilisé dans le processus de rinçage avec la chaleur obtenue lors de la condensation du distillat.

6. Installation pour la mise en oeuvre du procédé selon l'une ou plusieurs des revendications précédentes, comportant au moins un dispositif de nettoyage (10), un dispositif de rinçage (12) et un vaporisateur (30), dans laquelle le dispositif de nettoyage est relié au vaporisateur (30) via une conduite de liquide de nettoyage (16) pour le passage de liquide de nettoyage vers le vaporisateur, et le vaporisateur dispose d'une conduite de distillat (40, 46) servant au retour du distillat, caractérisée en ce que la conduite de liquide de nettoyage (16, 20a) mène à un dispositif de filtre à membrane (22), qui est relié au vaporisateur (30) via une conduite de perméat (26) pour le passage de perméat produit par le dispositif de filtre à membrane, en ce que la conduite de distillat (40, 46) est reliée au dispositif de rinçage (12), et en ce qu'une zone à produit concentré (30b) du vaporisateur (30) est reliée au dispositif de nettoyage (10) via une conduite de produit concentré (32).

7. Installation selon la revendication 6, caractérisée en ce que le dispositif de rinçage (12) est relié au dispositif de nettoyage (10) via une conduite de liquide de rinçage (14) pour le passage de liquide de rinçage dans le dispositif de nettoyage (10).

8. Installation selon l'une ou l'autre des revendications 6 et 7, caractérisée en ce que la conduite de liquide de nettoyage (16) relie le dispositif de nettoyage (10) à un récipient collecteur de liquide de nettoyage (18), et en ce que ce dernier ainsi que le dispositif de filtre à membrane (22) sont raccordés à un circuit (24) présentant une pompe (20c) via une conduite d'amenée et de retour (20a ou 20b).

9. Installation selon l'une ou plusieurs des revendications 6 à 8, caractérisée en ce que la conduite de distillat (40, 46) comporte au moins un échangeur de chaleur (42) pour le chauffage du liquide de rinçage et/ou de nettoyage.

10. Installation selon la revendication 8, caractérisée en ce que le récipient collecteur- de liquide de nettoyage est réalisé en tant que séparateur d'huile (18) qui présente une zone à huile (18a) et une zone à liquide pur (18b), et en ce que la conduite d'amenée (20a) est raccordée à cette dernière.

11. Installation selon la revendication 10, caractérisée en ce qu'une région inférieure du séparateur d'huile (18) est reliée au vaporisateur (30) via une conduite d'évacuation (50) et une région inférieure du vaporisateur est pourvue d'une conduite de sortie (30c) pour des déchets à évacuer hors du vaporisateur.

12. Installation selon l'une ou plusieurs des revendications 6 à 11, caractérisée en ce que le dispositif de filtre à membrane (22) est relié au dispositif de nettoyage (10) via une conduite de perméat (28) pourvue d'une soupape.
